# EUROPEAN PATENT APPLICATION

(11) **EP 1 408 493 A1**
(43) Date of publication of application: **14.04.2004**
(21) Application number: 02720454.4
(22) Date of filing: 17.04.2002
(51) Int. Cl.: G11B 11/105

(54) **MAGNETO-OPTIC RECORD MEDIUM**

(30) Priority: 19.04.2001 JP 2001120909
(71) Applicant: CANON KABUSHIKI KAISHA, Ohta-ku Tokyo 146-8501 (JP); MATSUSHITA ELECTRIC INDUSTRIAL CO., LTD., Kadoma-shi, Osaka 571-8501 (JP)
(72) Inventor: NISHIKAWA, Koichiro, Takasaki-shi, Gunma 370-0011 (JP); HASHIMOTO, Morimi, Wako-shi, Saitama 351-0101 (JP); NISHIKIORI, Keiji, Yawata-shi, Kyoto 614-8280 (JP); BIRUKAWA, Masahiro, Hirakata-shi, Osaka 573-0077 (JP)
(74) Representative: Beresford, Keith Denis Lewis
(86) International application number: PCT/JP2002/003803
(87) International publication number: WO 2002/086882

(57) **Abstract**

As a magneto-optical recording medium capable of obtaining stable tracking servo signals with a narrow tracking pitch with less influences of cross talk and cross write, a magneto-optical recording medium is provided which comprises a plurality of recording/reproducing tracks and wobble pits for a sample servo, wherein each of the wobble pits is provided between two adjacent tracks and used commonly by the adjacent tracks.

## Description

### Technical Field

The present invention relates to a magneto-optical recording medium which records an information on a magnetic thin film, and more specifically, to a magneto-optical recording medium which reproduces the recorded information according to a domain wall displacement detection system.

### Background Art

As a rewritable high density recording system for a magneto-optical recording medium, a system that records an information by writing magnetic domains on a magnetic thin film using a thermal energy of a semiconductor laser and reads the information using a magneto-optical effect is available. In recent years, there is a growing demand for a further increase in recording density of a magneto-optical recording medium using this system to realize a large-capacity recording medium.

The line recording density of an optical disk that is a magneto-optical recording medium largely depends on the laser wavelength of a reproducing optical system and the numerical aperture of an objective lens. However, there is a limit to improvements of the laser wavelength of the reproducing optical system and numerical aperture of the objective lens. Thus, technologies for improving a recording density by devising the configuration of the recording medium and the reading method are under development.

An example of such technologies is the one disclosed in Japanese Patent Application Laid-Open No. 6-290496. According to this technology, an information is recorded on a record carrying layer in a multilayer configuration having magnetically coupled magnetic domain wall displacement layer and record carrying layer. When the information is reproduced, a domain wall with a recording mark on the domain wall displacement layer is moved using a temperature gradient produced by irradiation of a light beam without changing the information recorded in the record carrying layer. Then, the domain wall displacement layer is magnetized in such a way that a certain area of the light beam spot is identically magnetized and a change in the plane of polarization of the reflected light of the light beam is detected to thereby reproduce a recording mark within a diffraction limit of light.

This technology allows recording marks within a diffraction limit of light to be reproduced and can realize a magneto-optical recording medium and a reproducing method with drastically improved recording density and transfer speed.

With this magneto-optical recording medium, in order to facilitate displacements of domain walls of recording marks in the domain wall displacement layer using a temperature gradient produced by irradiation with a light beam, two adjacent grooves between which an information recording/reproducing track is located are irradiated with a high power laser beam and thereby subjected to high temperature annealing which is annealing treatment that modifies the recording medium layers in the grooves. This annealing treatment achieves the effect of preventing domain walls that form recording marks from becoming magnetic domains with closed domain wall. This reduces the action of domain wall coercive force and thereby allows more stable displacement of domain walls. This annealing treatment allows better reproduction signals to be obtained.

Furthermore, there is increasing research on a magneto-optical disk aiming at achieving a higher density without the need for annealing treatment and also allowing grooves to be used as tracks. Such a magneto-optical disk can realize highly density of the magneto-optical disk in a direction perpendicular to tracks.

For example, Japanese Patent Application Laid-Open No. 11-191245 realizes a so-called land/groove recording medium by specifying surface roughness of a substrate.

Furthermore, Japanese Patent Application Laid-Open No. 11-120636 realizes a land/groove recording medium by increasing a tapering angle of sidewalls of the grooves.

Japanese Patent Application Laid-Open No. 11-195252 achieves a land/groove recording medium with deep grooves by controlling surface roughness of groove sidewalls of a substrate.

Thus, for tracks of a magneto-optical recording medium, it is conventionally possible to narrow track pitch down to approximately 0.5 µm. Experiments have confirmed that it is practically possible to effect recording/reproduction with a linear density of 0.11 µm/bit using a land/groove substrate having deep grooves with a track pitch of 0.6 µm (having a groove depth of approximately 100 nm). This is equivalent to a recording density of 10 Gbit/inch².

A reproducing operation of a conventional domain wall displacement type magneto-optical disk will be explained below.

Here, a case of a three-layer structure of a record carrying layer, domain wall displacement layer and switching layer will be illustrated. The record carrying layer stores recording marks. The domain wall displacement layer has movable domain walls and is used to reproduce an information. The switching layer switches the state of coupling between the record carrying layer and domain wall displacement layer. Furthermore, as described above, two adjacent grooves between which an information recording track is located are irradiated with a high power laser beam to subject the grooves to high-temperature annealing treatment to thereby modify the magnetic layers of the grooves.

At temperatures lower than temperature Ts, the switching layer is in an exchangeably coupled state and couples with the record carrying layer and the domain wall displacement layer. When an information is reproduced, a light beam is irradiated to heat the magneto-optical recording medium up to the temperature Ts at which domain walls of the domain wall displacement layer move.

When the magneto-optical recording medium is heated to the temperature Ts or above, the switching layer reaches a Curie point to severe the coupling thereof with the domain wall displacement layer and the record carrying layer. For this reason, when the temperature of the domain walls of the recording marks reaches the temperature Ts, in co-operation with the action of the annealing treatment on the grooves on both sides of the information recording track, the domain wall of the domain wall displacement layer moves. At this time, the domain wall of the domain wall displacement layer instantaneously moves across the land to a position at which it exists stably in terms of energy with respect to the temperature gradient, that is, a point of a maximum temperature in a linear density direction of temperature rise due to the irradiation with a light beam. With the movement of the domain wall, the magnetization states of most regions covered with a reproducing light beam become identical, so that it is possible to obtain reproduction signals from fine recording marks that cannot be reproduced based on the normal principle of light beam reproduction.

Assuming annealing treatment, the aforementioned conventional magneto-optical recording medium has not optimized the medium groove structure (groove shape), annealing conditions, and so on.

Therefore, when a track pitch is narrowed, the conventional magneto-optical recording medium cannot obtain any stable tracking servo signal. Furthermore, when a track pitch is narrowed, the conventional magneto-optical recording medium is subject to increase in leakage of signals from adjacent tracks, so-called cross talk, during information reproduction. Furthermore, when a track pitch is narrowed, the conventional magneto-optical recording medium sometimes cannot secure tracks capable of stable domain wall displacement detection. Furthermore, when a track pitch is narrowed, the conventional magneto-optical recording medium is subject to increases in so-called cross write which damages recording signals of adjacent tracks during information recording.

Furthermore, when the conventional magneto-optical recording medium performs land/groove recording, it has different temperature distributions formed when a land is traced and when a groove is traced depending on the near field behavior of incident light. Especially when a land is traced, a light of a relatively higher intensity than when a groove is traced is required. Optimizing the light intensity with respect to the recording in lands may cause cross writes to grooves when an information is written to the lands.

### Disclosure of the Invention

It is an object of the present invention to provide a magneto-optical recording medium capable of obtaining stable tracking servo signals with a narrow tracking pitch with less influences of cross talk and cross write.

An example of configuration for realizing the above object is as follows.

A magneto-optical recording medium comprising:
a plurality of recording/reproducing tracks; and
wobble pits for a sample servo,
wherein each of the wobble pits is provided between two adjacent tracks and used commonly by the adjacent tracks.

### Brief Description of the Drawings

FIG. 1 is a conceptual diagram showing features of a magneto-optical disk according to an embodiment of the present invention;
FIG. 2 is a schematic enlarged view of a part in a circumferential direction of the magneto-optical disk according to the embodiment of the present invention;
FIGS. 3A and 3B are conceptual diagrams showing recording and reproduction states of the magneto-optical disk according to the embodiment of the present invention;
FIG. 4 is a schematic view of an annealing optical head optical system used in the embodiment of the present invention;
FIG. 5 is a conceptual diagram showing a state of annealing treatment applied to the magneto-optical disk according to the embodiment of the present invention;
FIG. 6 is a graph showing a relationship between track width and jitter value during domain wall displacement reproduction;
FIG. 7 is a graph showing dependency of an amount of reflected light on a groove depth;
FIG. 8 is a graph showing dependency of pre-pit signal amplitude on a pit depth;
FIG. 9 is view illustrating a relationship between the groove depth and pre-pit depth;
FIGS. 10A and 10B are conceptual diagrams showing the width of an annealing region;
FIG. 11 is a conceptual diagram showing a state of annealing treatment applied to a magneto-optical disk according to a second embodiment of the present invention;
FIG. 12 is a schematic diagram of an annealing optical head optical system used in the second embodiment of the present invention;
FIGS. 13A and 13B are views illustrating light absorption of a light beam incident on a land from a substrate side;
FIGS. 14A and 14B are views illustrating light absorption of a light beam incident on a land 5 from a film surface side;
FIG. 15 is a graph showing the result of a measurement of a radial temperature gradient of a temperature distribution during annealing treatment using an objective lens with a numerical aperture NA = 0.90;
FIGS. 16A and 16B are conceptual diagrams showing characteristic portions in annealing treatment of a magneto-optical disk according to a third embodiment;
FIGS. 17A, 17B and 17C are views illustrating an example of the shape of the magneto-optical disk according to the third embodiment;
FIG. 18 is a view illustrating a method of forming a stacked thin film of the magneto-optical disk according to the third embodiment; and
FIG. 19 is a conceptual diagram showing a state of recording/reproduction of a magneto-optical disk according to a fourth embodiment.

### Best Mode for Carrying Out the Invention

With reference now to the attached drawings, embodiments of the present invention will be explained below. Embodiments shown below are examples of preferred embodiments of the present invention, but the present invention is not limited to these embodiments by any means.

### (First Embodiment)

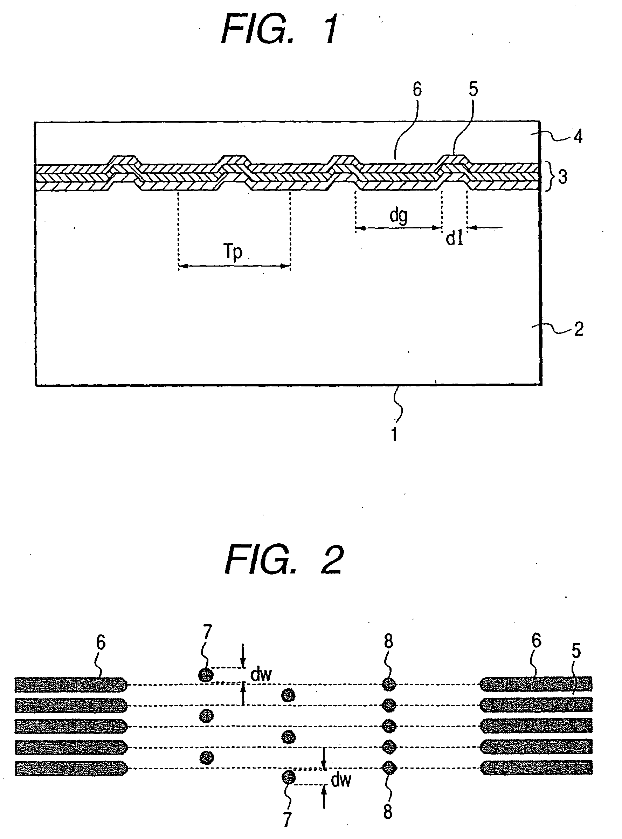

FIG. 1 is a conceptual diagram showing features of a magneto-optical disk according to an embodiment of the present invention.

In FIG. 1, a magneto-optical disk 1 includes a substrate 2, a magnetic layer 3 and a protective film 4.

The magnetic layer 3 is constructed of at least a domain wall displacement layer, a switching layer and a record carrying layer formed on the substrate 2.

The protective film 4 is provided on the magnetic layer 3.

The substrate 2 is provided with lands 5 and grooves 6. The grooves 6 are formed at intervals of a track pitch Tp for use as recording/reproducing tracks.

Though not shown, a dielectric film for adjustment of reflectance is formed between the substrate 2 and the magnetic film 3. Further, though not shown, a radiation layer for adjustment of a thermal structure is provided between the magnetic film 3 and the protective film 4.

FIG. 2 is a schematic diagram with an enlarged view of a part in a circumferential direction of the magneto-optical disk 1.

The magneto-optical disk 1 of this embodiment includes an area where no grooves 6 but pre-pits are provided. FIG. 2 shows areas where there are no grooves 6 of the magneto-optical disk 1.

The pre-pits include clock pits, wobble pits and address pits, etc. In FIG. 2, wobble pits 7 and address pits 8 are provided.

The wobble pits 7 are provided on an extension of the land 5 between the grooves 6 at intervals of Tp × 2. One wobble pit 7 is used commonly by a sample servo on two adjacent tracks. Common use of one wobble pit 7 allows a tracking servo with a narrow track pitch.

The address pit 8 is provided on an extension (broken line in FIG. 2) of the groove 6.

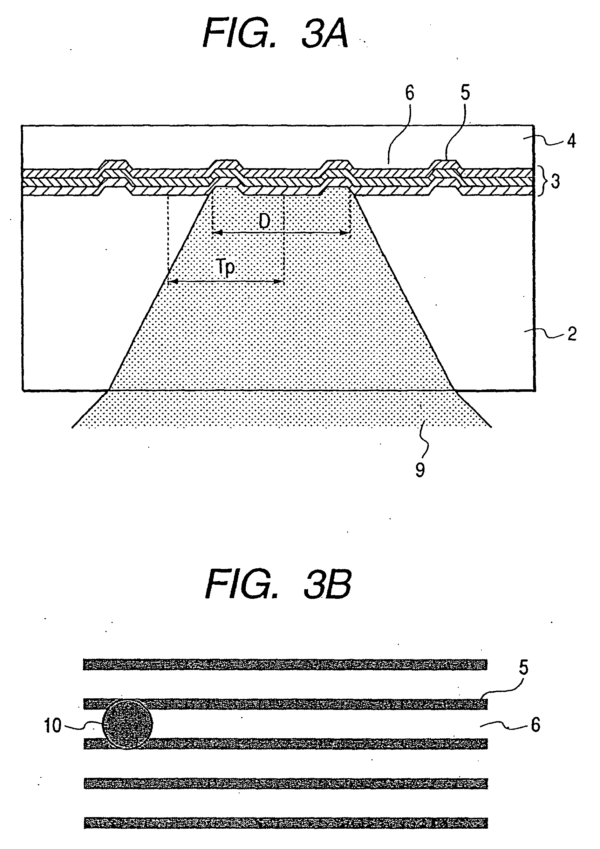

FIGS. 3A and 3B are conceptual diagrams showing recording and reproduction states of the magneto-optical disk 1.

FIG. 3A shows a sectional view of the magneto-optical disk 1 during recording/reproduction. A recording/reproducing light beam 9 having a spot diameter (full width at half maximum) of D strikes the groove 6 through the substrate 2.

As the optical specification of the recording/reproducing apparatus (not shown) in the first embodiment, suppose wavelength λ is approximately 650 nm and numerical aperture of the objective lens NA = 0.60. Therefore, the spot diameter (full width at half maximum) at this time is D≈φ0.57 µm. The wavelength λ = 650 nm is a wavelength principally used in a current recording/reproducing optical system.

FIG. 3B is a top view of the magneto-optical disk 1 during recording/reproduction. A recording/reproducing light beam spot 10 strikes the grooves 6.

As shown in FIGS. 3A and 3B, the track pitch Tp here is less than the spot diameter D of the recording/reproducing light beam spot 10. The track pitch of the magneto-optical disk 1 can be narrowed using the above-described pre-pits to attain a higher density. A preferable track pitch of the magneto-optical disk 1 is a track pitch Tp = 0.54 µm. The value of this track pitch Tp is calculated by optimizing various parameters in the construction of the magneto-optical disk 1 and the method of determining it will be explained below.

Optimization of the configuration of the magneto-optical disk 1 of this embodiment will be explained. A push-pull method in which a tracking servo is performed using the groove 6 or land 5 as a guide groove generally uses approximately Tp>1.2 × D as the track pitch Tp. However, this embodiment uses a sample servo method using wobble pits and therefore the tracking servo is stable also with a track pitch narrower than that.

Further, in this embodiment, in order for one wobble pit 7 to be used commonly by two adjacent tracks, the width dw of the wobble pit 7 shown in FIG. 2 is set to 0.8 to 1 time the spot diameter D. In this way, a tracking error signal that enabled a high quality sample servo was obtained.

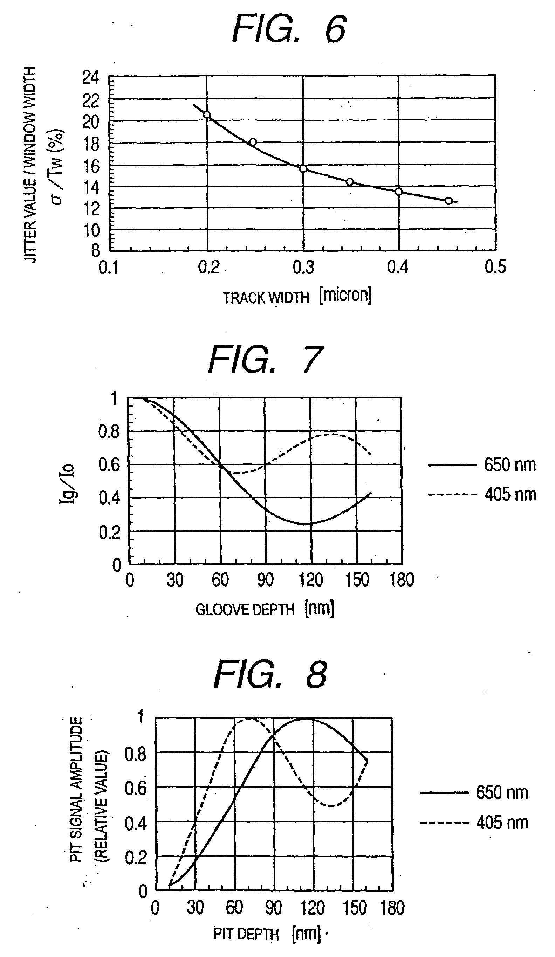

As described above, in domain wall displacement detection used in this embodiment, because the displacement of domain walls caused by a temperature gradient is utilized, it is very important to match a temperature distribution formed by a reproducing beam with the groove width. The above-mentioned relationship between the recording/reproducing spot diameter and the groove width is experimentally determined as shown in the graph in FIG. 6, but it goes without saying that a temperature distribution acts as a parameter in determining the relationship.

Then, the annealing treatment of the land 5 according to this embodiment will be explained.

As described as the conventional technology, when reproducing an information, a light beam with an intensity higher than the intensity when recording the information is irradiated onto the lands 5 as annealing treatment to modify the magnetism, thereby magnetically parting the adjacent grooves 6.

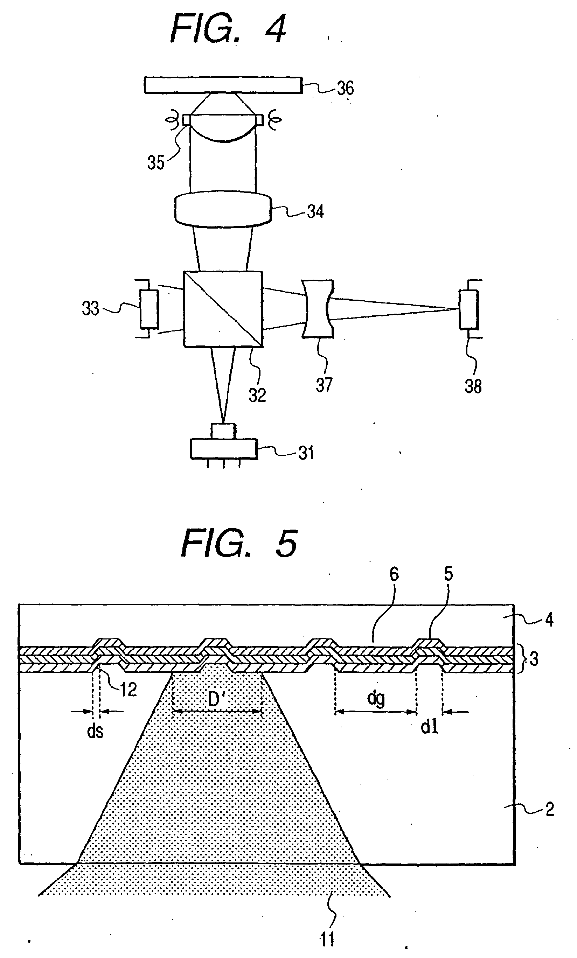

FIG. 4 is a schematic view of an annealing optical head optical system used in this embodiment.

The annealing optical head optical system includes a semiconductor laser 31, a beam splitter 32, a power monitor sensor 33, a collimator 34, an objective lens 35, a magneto-optical disk 36, a sensor lens 37 and a signal sensor 38.

A part of the light beam emitted from the semiconductor laser 31 passes through the beam splitter 32 and the other part is reflected. The light reflected by the beam splitter 32 is received by the power monitor sensor 33. The light that has passed through the beam splitter 32 is transformed into a parallel light by the collimator 34, condensed by the objective lens 35 and irradiated onto the recording plane of the magneto-optical disk 36.

A part of the light reflected by the magneto-optical disk 36 is reflected by the beam splitter 32 and condensed onto the signal sensor 38 by the sensor lens 37. A servo signal is output from the signal sensor 38.

Since the wobble pits are provided for groove tracing, a tracking servo is performed for land tracing using a continuous servo according to the push-pull method.

Here, the semiconductor laser 31 has a shorter wavelength than a recording/reproducing semiconductor laser. Furthermore, other optical elements have configurations equivalent to those of the recording/reproducing optical head, but their wavelengths are adjusted to the wavelength of the semiconductor laser 31 and are different from that of the recording/reproducing optical head.

FIG. 5 is a conceptual diagram showing the state of annealing treatment on the magneto-optical disk 1 according to this embodiment. The wavelength of the semiconductor laser 31 is approximately λ = 405 nm and the numerical aperture of the objective lens is NA = 0.60. Therefore, the spot diameter (full width at half maximum) is approximately D'= φ0.36 µm.

Then, as shown in FIG. 5, annealing treatment is performed on the lands 5 with the light beam 11. Since annealing treatment is performed using a small spot formed by the semiconductor laser 31 of a shorter wavelength than a recording/reproducing wavelength, the width of the annealing treatment area can be narrowed.

Then, optimization of the widths of the lands 5 and grooves 6 of the magneto-optical disk with a narrowed track pitch, and the track pitch will be explained. Here, suppose each width refers to a half-width.

When the wavelength is approximately λ = 405 nm and the numerical aperture of the objective lens NA = 0.60, it has been experimentally determined as knowledge that obtaining a sufficient tracking error signal using the push-pull method requires a land width dl of 0.1 µm or more. That is, the land width dl ≥ 0.1 µm is required.

Thus, aiming at obtaining the narrowest possible track pitch, the land width dl≈0.1 µm is assumed here.

FIG. 6 is a graph showing a relationship between a track width and jitter value during domain wall displacement reproduction. As optical parameters, the wavelength is λ = 650 nm and the numerical aperture of the objective lens (NA) is 0.60.

The axis of ordinate shows a value obtained by dividing a jitter value σ by the window width Tw of a data clock and expressed in percentage and it is generally said to be preferably 14% or less.

The recording/reproduction information is a random signal with (1-7) RLL modulation and the shortest mark length of 0.12 µm and an information is also recorded in adjacent tracks.

When the graph in FIG. 6 is referenced under a condition of σ/Tw<14%, it can be seen that when the domain wall displacement reproduction is to be performed, a track width of approximately 0.37 µm or more is necessary. That is, the groove width dg needs to be dg ≥ 0.37 µm.

As described above, since the spot diameter D of the recording/reproducing light beam is D≈φ0.57 µm, it can be said that the groove width dg needs to be 2/3 or more of the diameter D of the recording/reproducing light spot.

On the other hand, as the future trend, the wavelength of the recording/reproducing optical system tends to be changed from 650 nm to 405 nm and 405 nm will possibly be a mainstream wavelength of the recording/reproducing optical system in the near future. Therefore, it is preferable for the magneto-optical disk to be able to reproduce an information satisfactorily for both 650 µm and 405 µm.

According to an analysis of a light spot profile based on a vector analysis, analysis of a light absorption distribution of a thin film and analysis of a temperature distribution based on a thermal diffusion equation using the analysis results, if reproduction is made possible with a recording/reproducing optical system with a wavelength of 405 nm, the full width at half maximum D of the light spot is D≈φ0.36 µm and the full width at half maximum of the formed temperature distribution in the radial direction of the magneto-optical disk is approximately 0.5 µm. The groove width dg needs to be smaller than this temperature distribution.

Therefore, to perform good domain wall displacement reproduction with a recording/reproducing optical head with a wavelength of 405 nm and NA = 0.60, the groove width dg needs to be approximately dg < 0.5 µm. As described above, because the diameter of the recording/reproducing light beam spot D is D≈φ0.57 µm, it can be said that the groove width dg is preferably smaller than 7/8 of the diameter D of the recording/reproducing light spot. Alternatively, because the land width dl is set to be dl≈0.1 µm as described above, the groove width is dg<D-0.1 µm.

As shown above, a favorable groove width dg within the range of wavelength 650 to 405 nm is 0.37 µm < dg < 0.50 µm. That is, 2/3D < dg < 7/8D.

It can be seen from the above that a land width dl≈0.1 µm and a groove width dg≈0.37-0.50 µm are preferable and a preferable track pitch is Tp=0.46-0.6 µm.

Then, in the case of a maximum value, the track pitch Tp is preferably on the order of the diameter D of the recording/reproducing light spot. That is, Tp = (0.8 × D) to D.

Thus, in this embodiment, from the balance between the narrowed track pitch and the quality of the domain wall displacement reproduction signal, an optimum track pitch Tp = 0.54 µm is determined. Then, as described above, since the land width dl is dl≈0.1 µm, the groove width is dg≈0.44 µm and dl:dg≈2:9 is derived.

That is, for the structure of the medium to which the present invention is applicable, in the case of a track pitch of approximately the recording/reproducing light beam spot or less, it can be said that a ratio of land width to groove width of approximately 2:9 is appropriate.

Furthermore, since the width dw of the wobble pit 7 is set to be 0.8 to 1 time the spot diameter D as described above, approximately 4-6 times the land width dl is preferable.

Then, optimization of the depth of the groove 6 and the depth of the pre-pit will be explained.

FIG. 7 is a graph showing the dependency of the amount of reflected light on the groove depth. FIG. 8 is a graph showing the dependency of the pre-pit signal amplitude on the pit depth.

With reference to FIG. 7, Ig/Io on the axis of ordinate is a value obtained by normalizing the amount of light reflected by the magneto-optical disk and returned to the optical head (Ig) in a case where the spot is on the groove on the basis of the amount of light in a case of provision of no groove (Io). In the figure, the solid line shows the case with a wavelength of 650 nm and the broken line shows the case with a wavelength of 405 nm.

It can be seen from FIG. 7 that in order to secure a sufficient amount of light for both when the wavelength of the recording/reproducing optical system is 650 nm which is the current mainstream and when it is 405 nm which is supposed to be the mainstream in the near future, the depth of groove is preferably approximately 60 nm or less. If a sufficient amount of light is obtained, a high S/N ratio against noise of peripheral circuits is obtained, that is, a favorable domain wall displacement reproduction signal can be obtained.

Furthermore, it is generally well known that in order to obtain a servo signal using the push-pull method during annealing treatment, the groove depth is preferably in the vicinity of λ/8.

Considering the fact that the refractive index of the substrate is approximately 1.6 and the wavelength of the light beam for annealing treatment is 405 nm, the groove depth is preferably in proximity the vicinity of 30 nm.

However, since it is not preferable that a heat is transmitted to the grooves during annealing treatment, an unevenness structure is also necessary.

Therefore, taking into account all that has been described above, the groove depth hg is preferably 20 nm < hg < 60 nm.

In FIG. 8, the Pit signal amplitude on the axis of ordinate shows a relative signal amplitude obtained from the pre-pit. The solid line in the figure shows the case with a wavelength of approximately 650 nm and the broken line shows the case with a wavelength of approximately 405 nm.

Generally, the pre-pit signal has a greater signal level than the magneto-optical signal and has a very high S/N. Therefore, it can be seen from FIG. 8 that in order to secure a sufficient pre-pit signal amplitude for both when the wavelength of the recording/reproducing optical system is 650 nm which is the current mainstream and when it is 405 nm which is supposed to be the mainstream in the near future, the depth of pre-pit hp is preferably 45 nm or more and preferably on the order of 60 to 110 nm.

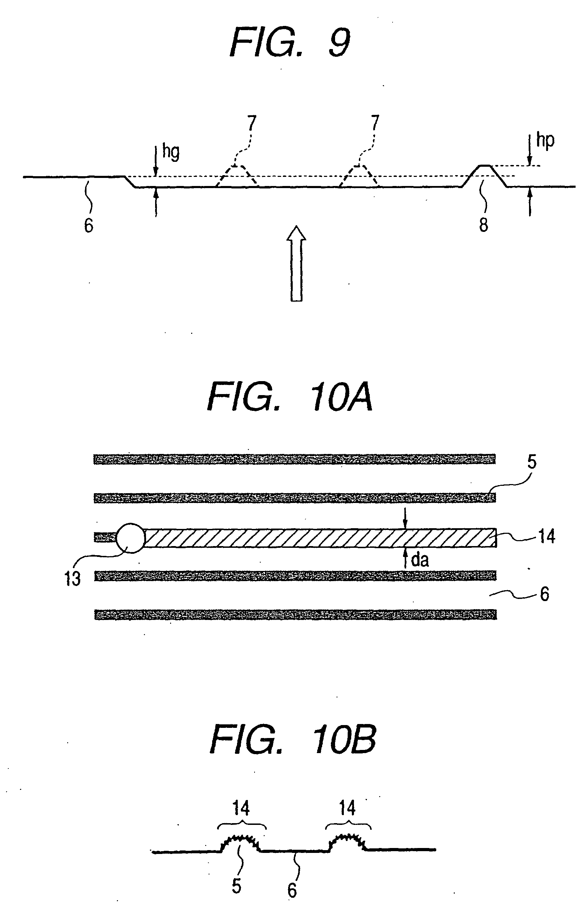

It can be seen from the explanations with reference to FIGS. 7 and 8 that it is preferable to set the groove depth hg ≤ the pre-pit depth hp as shown in FIG. 9.

This embodiment used a groove depth hg≈40 nm and a pre-pit depth hp≈80 nm. As a result, it was possible to obtain good tracking error signals and domain wall displacement reproduction signals.

Then, optimization of the slope of the land 5 (land slope) will be explained.

According to FIG. 5, the slope 12 of the land 5 has a width of ds.

Since narrowing the track pitch of the magneto-optical disk 1 is aimed at, it is preferable to reduce the width ds of the slope 12 of the land 5 to a minimum possible level to secure the track width. On the other hand, when a substrate with a narrow track pitch and a narrow land width is to be formed as is the case with this embodiment, it has been experimentally confirmed that the width ds of the slope 12 of the land 5 needs to be at least 0.8 times the land width dl. When the width ds of the slope of the land 5 was set to 0.8 or more times the land width dl, it was possible to form the substrate while maintaining good reproducibility of the land and groove structure.

Therefore, with consideration given to securing a wide width of the flat section of the groove 6 with a narrow track pitch, this embodiment set the width ds of the slope of the land 5 to be ds≈80 nm. Such a substrate showed good domain wall displacement reproduction with a narrow track pitch.

Then, optimization of the width of the annealing treatment area will be explained.

FIGS. 10A and 10B are conceptual diagrams showing the width (annealing width) da of the annealing treatment region 14.

As shown in FIG. 10A, in the annealing treatment, the optical output is adjusted so as to attain an annealing light beam spot 13 wider than the width of the land 5. As shown in FIG. 10B, in this embodiment, annealing treatment is applied in such a way that only the flat section of the groove 6 remains. That is, the annealing is performed such that the annealing width da > the land width dl.

In this embodiment, since the land width dl≈0.1 µm as described above, the annealing width da is approximately da = 0.12-0.20 µm.

When compared to the flat section of the groove, since the substrate has inferior surface quality at a part thereof corresponding to the land slope section, the surface quality of the surface at the land slope section of the magnetic film formed on the substrate is not good either. Therefore, when the recording mark extends to the land slope, domain wall displacement thereat becomes irregular, allowing a noise to leak into a reproduced information. Thus, since the land width dl≈0.1 µm and the land slope width ds≈80 nm, the annealing width da in this embodiment is preferably da≈0.20 µm. By doing so, domain wall displacement occurs only in the flat section and recording information on adjacent tracks is not damaged during recording and it is possible to suppress leakage of information from adjacent tracks during reproduction and allow good domain wall displacement reproduction.

Then, the result of consideration on the region whose physical properties are modified by annealing treatment will be explained.

The land 5 subjected to annealing treatment has a lower reflectance than the groove 6 as an optical change. This allows the information recorded in the groove to be reproduced satisfactorily through domain wall displacement reproduction and reduces leakage of information from the adjacent tracks (cross talk).

Furthermore, at least the magnetism of the switching layer is extinguished to sever the exchangeable coupling between the record carrying layer and the domain wall displacement layer, thereby bringing the domain wall displacement layer into an in-plane magnetized state. Alternatively, at least vertical magnetic anisotropy of the domain wall displacement layer is extinguished to make the layer a substantially in-plane magnetized film. Further, it is possible to extinguish the magnetism of the switching layer and also to extinguish the vertical magnetic anisotropy of the domain wall displacement layer.

At this time, in at least the domain wall displacement layer, vertical magnetic anisotropy constant Ku is 2πMs² or less or 1 × 10⁵ erg/cc or less. Here, Ms is saturation magnetization at a temperature near room temperature.

Alternatively, at this time, in at least the domain wall displacement layer, it is preferred that the domain wall energy is approximately 0.05 erg/cm.

In this way, the vertical magnetic anisotropy of the domain wall displacement layer of the land 5 is minimized such that fine recording magnetic domains cannot exist stably. Further, at the same time, the domain wall energy of the domain wall displacement layer at the land 5 is reduced. This makes it difficult for the domain walls to move, allows the domain walls to move smoothly in the groove 6, thus allowing good domain wall displacement reproduction.

Moreover, as a result, the domain wall displacement layer is brought into a state of an in-plane magnetized film to reduce the Kerr rotation angle to 0.01 or less, thereby suppressing leakage of a magneto-optical reproduction signal from the land 5.

Furthermore, it is desirable to set the residual magnetization Mr of the domain wall displacement layer of the land 5 to 10 emu/cc. This eliminates magnetism that prevents domain wall displacement in the groove 6.

As described above, in this embodiment, pre-pits for tracking servo are provided and at the same time the structures of the land, groove and pre-pit are optimized. Furthermore, by annealing the land section beforehand by the irradiation with a light beam of a wavelength shorter than the wavelength of the recording/reproducing light beam, the width of the annealing region is narrowed. Furthermore, by modifying the physical property at the land, the domain wall displacement in the grooves is smoothened, so that it becomes possible to secure satisfactory performance with a narrow track pitch. These make it possible to provide a magneto-optical medium capable of high-density information recording.

### (Second Embodiment)

A case where an annealing treatment method different from that of the first embodiment will be shown as a second embodiment. The configuration of the magneto-optical disk of the second embodiment is the same as that of the first embodiment unless stated to be otherwise.

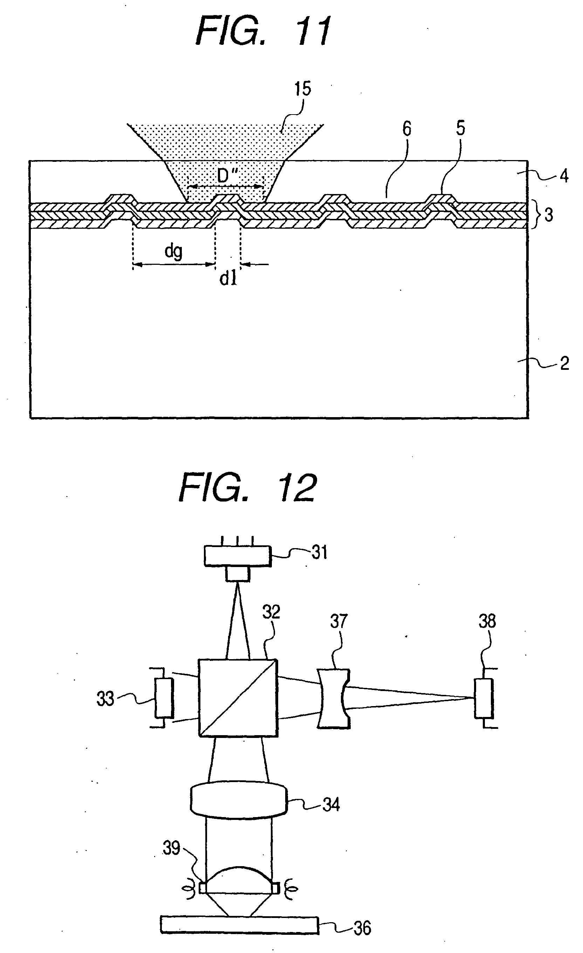

FIG. 11 is a conceptual diagram showing a state of annealing treatment of a magneto-optical disk according to the second embodiment of the present invention.

In the second embodiment, unlike the first embodiment shown in FIG. 5, a light beam 15 for annealing treatment is irradiated from the film surface side (from above in FIG. 11) onto the magnetic layer 3, not from the substrate 2 side. In this case, when any heat-radiating layer is necessary, it is formed after the annealing treatment.

FIG. 12 is a schematic view of an annealing optical head optical system used in the second embodiment of the present invention. The annealing optical head optical system shown in FIG. 12 differs from the annealing optical head optical system used in the first embodiment shown in FIG. 4 only in the objective lens. The annealing optical head optical system used in the second embodiment is provided with an objective lens 39 instead of the objective lens 35 shown in FIG. 4.

In the second embodiment, as with the first embodiment, a tracking servo for land tracing is performed using a continuous servo according to the push-pull method.

As shown in FIG. 11, since the annealing treatment from the film surface side is performed through a protective film 4 that is extremely thin as compared to the substrate 2, a high NA is easily attained.

Thus, the numerical aperture NA of the objective lens 39 is greater than NA = 0.60 of the objective lens 35 shown in FIG. 4 and is selected from the range of NA = 0.60 to 0.90 according to the width of the annealing region.

Here, when a heat-radiating layer is to be provided, a protective layer is provided between the magnetic layer 3 and the heat radiating layer and a light beam is irradiated through this protective layer instead of the protective film 4.

When the numerical aperture of the objective lens NA = 0.60 to 0.90, the spot diameter D" (full width at half maximum) is selectable from a range of approximately D" = φ0.24 to φ0.36 µm.

The numerical values indicating the structure of the magneto-optical disk in this embodiment are as follows.

The width dl of the land 5 is dl≈0.44 µm. The width dg of the groove 6 is dg≈0.10 µm. The land slope width dw is dw=0.08 µm. The depth hg of the groove 6 is hg≈0.04 µm.

Then, results of a comparison between the case of a light beam incident on the land 5 from the substrate side and the case of a light beam incident from the film side will be explained.

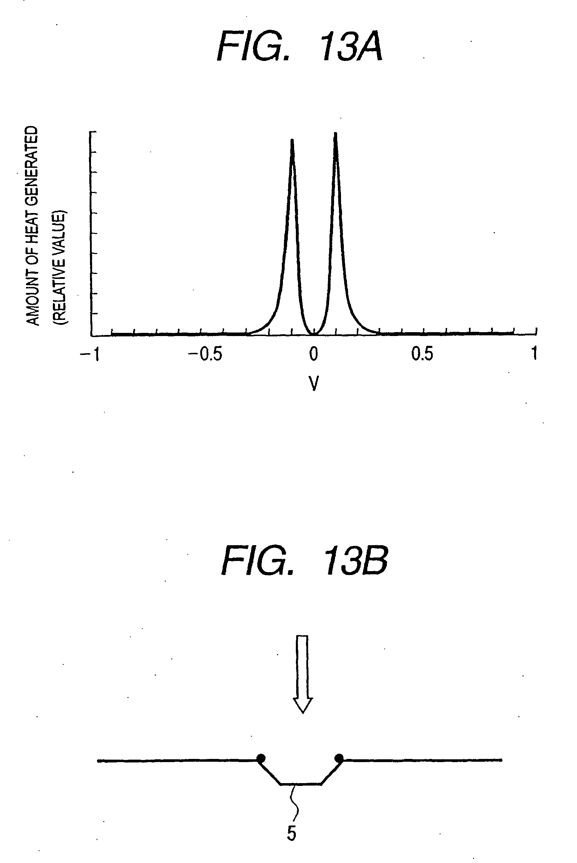

FIGS. 13A and 13B show the state of light absorption in the case of a light beam incidence on the land 5 from the substrate side. FIG. 13A shows a light absorption distribution, the axis of abscissa shows the position V with the center of the land 5 being defined as 0 and the axis of ordinate indicates a relative amount of heat generated. According to FIGS. 13A and 13B, in the case of the light beam incidence on the land 5 from the substrate 2 side, there is large light absorption at the edges of the recessed portion (black circles in FIG. 13B) when viewed from the light beam incidence side. The arrow in FIG. 13B indicates the direction of the incident light beam. Therefore, the energy of light shows a tendency to disperse toward both sides of the land 5.

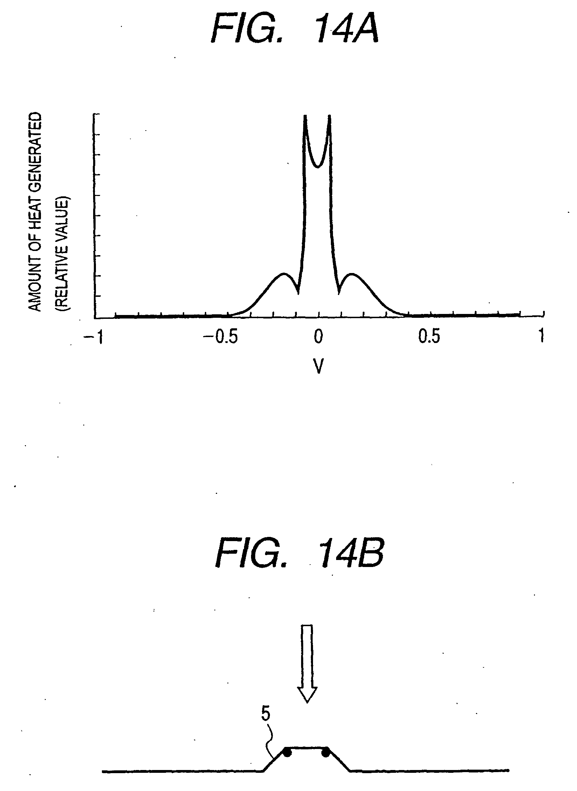

FIGS. 14A and 14B show the state of light absorption in the case of a light beam incidence on the land 5 from the film surface side. FIG. 14A shows a light absorption distribution, the axis of abscissa shows the position V with the center of the land 5 being defined as 0 and the axis of ordinate shows a relative amount of heat generated. According to FIGS. 14A and 14B, in the case of a light beam incidence on the land 5 from the film surface side, there is strong heat absorption at the edges of the protruding portion (black circles in FIG. 14B) when viewed from the light beam incidence side. The arrow in FIG. 14B indicates the direction of the incident light beam. Therefore, the energy of light shows a tendency to be trapped in the land 5.

It has be seen from the above that the annealing treatment with a light beam incidence from the film surface side makes it easy to adopt a high NA. Furthermore, it has also be seen that the annealing treatment with a light beam incidence from the film surface side makes it possible to confine the energy of light within the land 5.

That is, it has been seen that the annealing treatment method using a light beam incidence from the film surface side makes it easier to perform annealing treatment only to the land 5.

Because it is possible to reduce the diameter of the annealing spot (half-width), from the standpoint of the relationship with the annealing width, it has been seen as the result of investigation that when the numerical aperture of the objective lens NA = 0.90, the diameter of the annealing spot approximately twice the annealing width is acceptable. That is, with respect to the annealing spot diameter≈φ0.24 µm, the annealing width ≈0.12 to 0.14 µm.

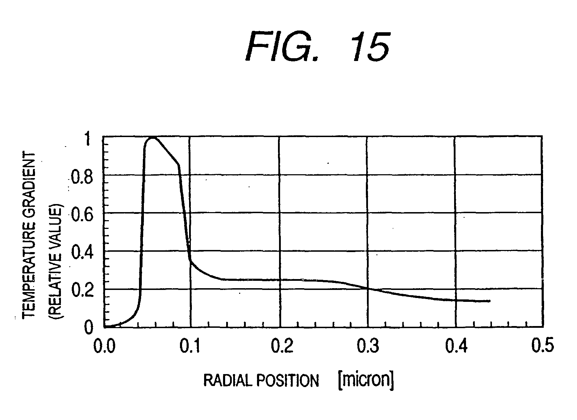

FIG. 15 is a graph showing the result of investigation of the radial temperature gradient of a temperature distribution during annealing treatment with the numerical aperture of the objective lens NA = 0.90.

The axis of abscissa in FIG. 15 represents the distance in the radial direction of the magneto-optical disk from the center of the land 5 (radial position). It can be seen from FIG. 15 that the temperature gradient reaches a maximum when the radial position is 0.06 µm. That is, the annealing width is preferably about 0.12 µm.

If the annealing width in the first embodiment is 0.12 to 0.20 µm, the numerical aperture of the objective lens NA is preferably 0.72 to 0.90.

Therefore, if annealing treatment is performed with such temperature distribution and annealing width, the boundary between the annealing region and the non-annealing region becomes steep, allowing treatment with good clarity. Furthermore, even if the optical output of annealing treatment varies, the variation in the width of the annealing region is small and it is possible to perform extremely good annealing treatment.

Furthermore, even if a certain level of de-tracking occurs during annealing, there is no such problem that the annealing treatment will extend to the flat section of the groove.

Thus, the adoption of a numerical aperture of the objective lens NA = 0.90 for the aforementioned medium structure as the second embodiment allowed good annealing treatment.

As described above, according to the second embodiment, applying annealing treatment with a high NA light beam from the film surface side makes it possible to obtain the effect of confining the energy of light. For this reason, the second embodiment allows stable annealing treatment compared to the annealing method of the first embodiment and provides a magneto-optical disk capable of high-performance (that is, with influences of cross talk and cross write suppressed) domain wall displacement reproduction with a narrow track pitch.

### (Third Embodiment)

A magneto-optical disk according to the first and the second embodiments with various conditions of the substrate 2 optimized will be described as a third embodiment. The magneto-optical disk according to the third embodiment is the same as those of the first and the second embodiments unless stated to be otherwise.

Table 1 shows various optimized conditions of the magneto-optical disk according to the third embodiment.

**Table 1**

| | |
|---|---|
| 1 | Ra(G) ≤ Ra(L) |
| 2 | 1 nm ≤ Ra(L) ≤ 1.5 nm |
| 3 | Ra(G) ≤ 0.6 nm |
| 4 | Ra(T) ≤ 1 nm |
| 5 | No flat section is provided for lands. |
| 6 | 30 nm ≤ r(L) ≤ 60 nm |
| 7 | 30 nm ≤ r(G) |
| 8 | 30° ≤ θ(G) |
| 9 | I(G)/I(M) ≥ 0.95 |
| Ra(G): Surface roughness of groove | |
| Ra(L): Surface roughness of land | |
| Ra(T): Surface roughness of land slope | |
| r(L): Radius of curvature of land edge (see FIG. 17C) | |
| r(G): Radius of curvature of groove edge (see FIG. 17C) | |
| θ(G): Angle of groove slope | |
| I(G): Reflectance of light beam from groove surface | |
| I(M): Reflectance of light beam from mirror surface | |

The surface roughness Ra(L) of the land 5 has no correlation with the annealing treatment conditions, but considering the function of dividing the magnetic layer 3, the relation of Ra(G) ≤ Ra(L) is preferable in comparison with the surface roughness Ra(G) of the groove 6 that performs a domain wall displacement operation. According to. this embodiment, the movement of the domain walls in the groove 6 is smoothened, the movement of domain walls to the land 5 is suppressed and cross talk is suppressed, so that it is possible to realize a narrower track pitch.

In addition, with regard to surface roughness Ra(G) of the groove 6 and surface roughness Ra(L) of the land 5, it is preferable that Ra(G) ≤ 0.6 nm and 1 nm ≤ Ra(L) ≤ 1.5 nm as well.

The feature that surface roughness Ra(G) of the groove 6 is preferably Ra(G) ≤ 0.6 nm is a condition necessary for good domain wall displacement reproduction already disclosed in Japanese Patent Application Laid-Open No. 11-191245.

The surface roughness Ra(L) of the land 5 is preferably 1 nm or more, which prevents the domain walls within the groove 6 from intruding into the land 5. Moreover, the surface roughness Ra(L) of the land 5 is preferably 1.5 nm or less, which can suppress unnecessary noise affecting the recording/reproduction information of the groove 6.

Furthermore, setting the surface roughness Ra(T) of the groove slope to 1 nm or less enables good operation of the domain wall displacement reproduction.

As described above, the surface roughness of the land 5 and groove slope affects the domain wall displacement reproduction operation in the groove 6.

Moreover, the shape of the land 5 also affects the reproduction operation.

The tip end of the land 5 is preferably round in general. More specifically, presence of a flat section in the land 5 may cause noise to a recording/reproduction signal of the domain wall displacement in the groove 6. Thus, it is preferred that no flat section is formed in the land 5. If this requirement is expressed in terms of radius of curvature r(L) of the edge of the land 5, the effect of suppressing noise is obtained when the radius of curvature r(L) of the edge of the land 5 is 30 nm or more. On the other hand, when annealing treatment is performed using a push-pull signal, the radius of curvature r(L) of the edge of the land 5 is preferably 60 nm or less. If the radius of curvature r(L) of the land edge is more than 60 nm, the push-pull signal is hardly obtained, that is, a tracking servo is hardly applicable.

On the other hand, when the radius of curvature r(G) of the edge of the groove 6 is too small, noise may be produced. More specifically, the radius of curvature r(G) of the edge of the groove 6 is preferably 30 nm or more.

Furthermore, when annealing treatment of the land 5 is performed using a light beam with a short wavelength such as a wavelength λ≈400 nm and with a high NA such as a numerical aperture of the objective lens NA = 0.6 to 0.9, setting the angle of the slope of the groove 6 to 30° or more, preferably approximately 40° makes it possible to carry out a tracking servo using a push-pull method. Furthermore, noise against the domain wall displacement reproduction signal of the groove 6 (normal reproduction; numerical aperture of objective lens NA=0.6 with a light beam wavelength λ during recording/reproduction of 650 nm) is reduced.

Furthermore, with regard to the reflectance I(G) of the recording/reproducing light beam of the groove 6, when the reflectance of the area with no groove 6 (mirror section) is assumed to be I(M), I(G)/I(M) is preferably 0.95 or more, which makes it possible to obtain a favorable domain wall displacement type magneto-optical recording/reproduction signal. The reflectance I(G) of the recording/reproducing light beam of the groove 6 can be adjusted by selecting a groove depth, groove width and angle of the groove slope, etc.

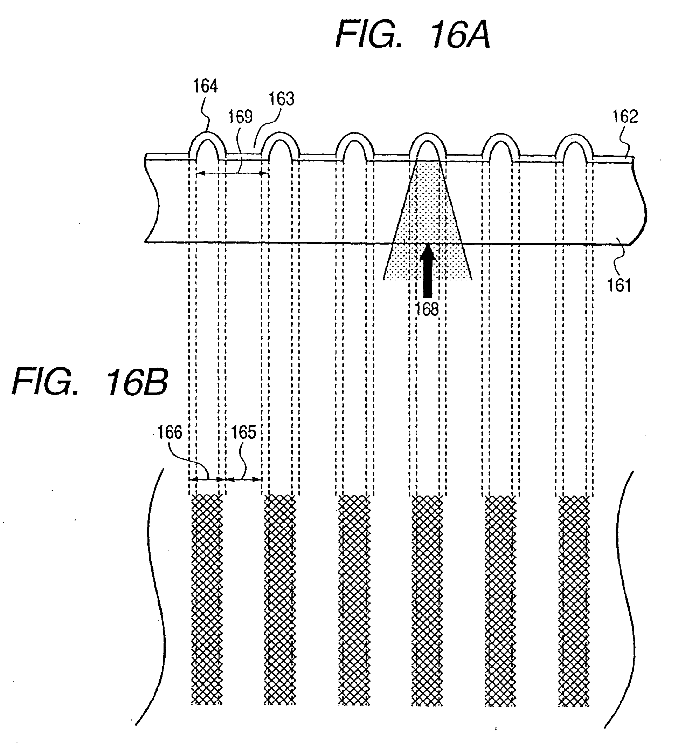

FIGS. 16A and 16B are conceptual diagrams showing characteristic portions of the magneto-optical disk of this embodiment during annealing treatment.

FIG. 16A is a conceptual sectional view of a medium with a stacked thin film 162 such as a magnetic layer formed on the surface of a land/groove substrate 161.

The land/groove substrate 161 has lands 164 and grooves 163. A track pitch 169 of the land/groove substrate 161 (sum of the width of the land 164 and the width of the groove 163) is less than the beam diameter of a recording/reproducing light beam 168.

FIG. 16B shows the magneto-optical disk after annealing treatment viewed from above. FIG. 16B shows annealing sections 166 and non-annealing sections 165. The non-annealing sections 165 are areas where information is recorded.

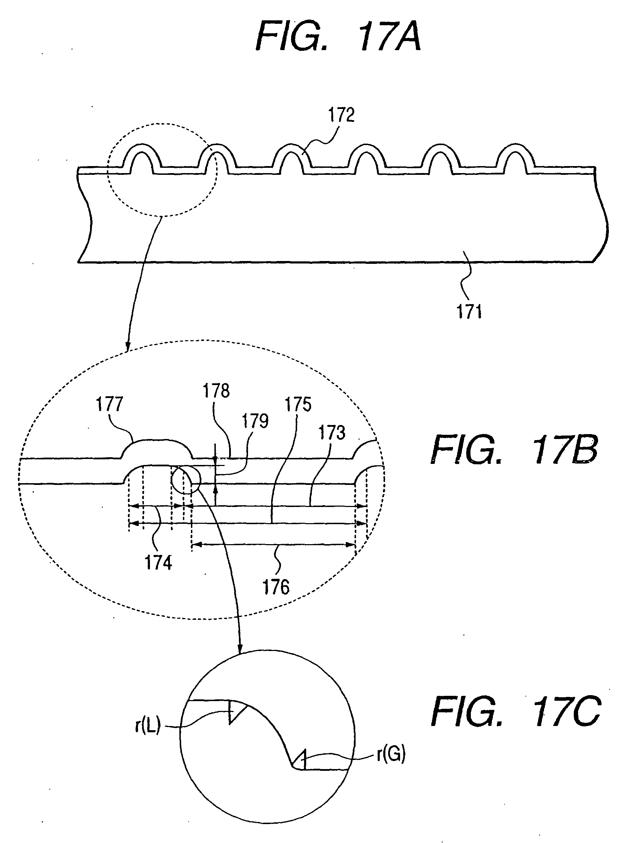

FIGS. 17A, 17B and 17C are views illustrating an example of a shape of the magneto-optical disk of this embodiment.

With reference to FIG. 17A, the magneto-optical disk of this embodiment has a shape with a stacked thin film 172 such as a magnetic thin film formed on a polycarbonate substrate 171.

According to FIG. 17B, the polycarbonate substrate 171 is a land/groove substrate having a land width 174 of 0.14 µm, a groove width 173 of 0.40 µm, a track pitch 175 of 0.54 µm, a groove bottom width 176 of 0.36 µm and a groove depth 179 of 55 nm.

Here, the surface roughness Ra(L) of the surface of the flat section of the land 5 is 1.1 nm, the surface roughness Ra(G) of the bottom surface of the groove 6 is 0.35 nm and the surface roughness Ra(T) of the groove slope is 0.82 nm. That is, there is a relationship of Ra(G) < Ra(L). The magneto-optical disk having such surface roughnesses of the respective sections can be formed by adjusting the resist conditions during formation of an original disk, or baking, ashing, or the like of the original disk or thermal treatment of an injection-molded polycarbonate substrate.

As shown in FIG. 17B, since the width of the land 177 of the polycarbonate substrate 171 of this embodiment is extremely narrow, it has a round tip with almost no flat section. Furthermore, the radius of curvature r(L) of the edge of the land 177 shown in FIG. 17C is 45 nm and the radius of curvature r(G) of the edge of the groove 178 is 40 nm. Moreover, the angle of the groove slope is 40°. Furthermore, the measurement result of the reflectance of the groove is 0.96.

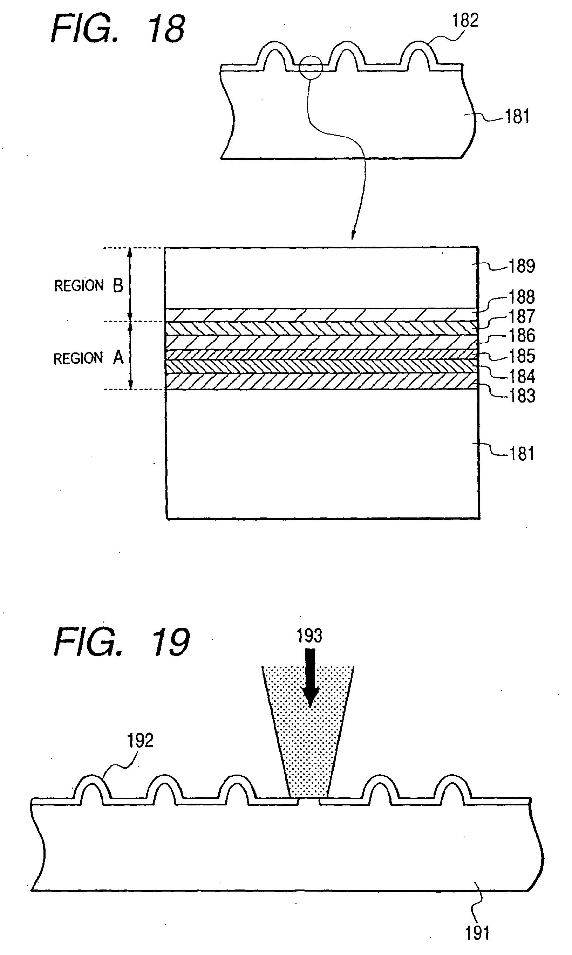

FIG. 18 is a view illustrating a method of forming a stacked thin film of the magneto-optical disk of this embodiment.

With reference to FIG. 18, the method of forming a stacked thin film will be explained.

The method of forming the stacked thin film 182 firstly involves forming an SiN layer of 90 nm in thickness on a polycarbonate substrate 181 as an interference layer (dielectric layer) 183. Then, a GdFeCoAl layer of 30 nm in thickness is formed as a domain wall displacement layer 184. Then, a TbFeAl layer of 10 nm in thickness is formed as a switching layer 185. Then, a TbFeCo layer of 80 nm in thickness is formed as a record carrying layer 186. Then, an SiN layer of 50 nm in thickness is formed as a protective layer (dielectric layer) 187. Then, an Al layer of 30 nm in thickness is formed as a heat-radiating layer 188. These layers are formed one after another according to a sputtering method.

On a stacked thin film 182 formed in this way, a ultraviolet curing resin layer of 2 µm in thickness is formed as a protective coat layer 189.

Then, only the lands 164 of the magneto-optical disk formed using the method explained using FIG. 18 is subjected to annealing treatment using an optical laser. In the annealing treatment, a light beam having a wavelength shorter than that of the recording/reproducing light beam is irradiated from the back or front of the substrate. In the formation method of this embodiment, suppose an optical laser is irradiated from the substrate side. Here, the wavelength of the optical laser for the annealing treatment is 400 nm and the numerical aperture of the objective lens NA is 0.65. Incidentally, the wavelength of the optical laser for recording/reproduction for the magneto-optical recording medium of the present invention including the magneto-optical disk of this embodiment is 650 nm and the numerical aperture NA of the objective lens is 0.6.

The annealing treatment may be performed to an extent that the magnetic characteristic of the objective part changes, that is, until that part becomes an in-plane magnetized film. More specifically, the power of the optical laser is preferably 4.2 mW and the relative rotation speed of the medium is preferably about 1.0 m/sec.
Incidentally, the polycarbonate substrate 181 and the stacked thin film 182 shown in FIG. 18 are the same as the land/groove substrate 161 and the stacked thin film 162 shown in FIG. 16A, respectively.

As illustrated in this embodiment, when annealing treatment is applied by irradiating an optical laser from the substrate side onto the stacked thin film 162, the boundary between the annealing section 166 and the non-annealing section 165 is positioned close to the edge of the groove 163. On the other hand, when annealing treatment is applied by irradiating an optical laser from the opposite side, the boundary between the annealing section 166 and the non-annealing section 165 is positioned close to the edge of the land. This is attributable to the phenomenon (optical confinement effect) that when irradiating a substrate with unevenness such as the land/groove substrate 161 with an optical laser, the energy of the optical laser concentrates on the uneven edge portions of the land/groove substrate 161.

Strictly speaking, the position of the edge of the land/groove substrate 161 is offset with respect to the position of the edge of the stacked thin film 162 by the film thickness of the stacked thin film. However, since the stacked thin film 162 is much thinner than the land/groove substrate 161, this offset can be ignored.

The magneto-optical disk of this embodiment was actually produced and evaluated. In this evaluation, an information was recorded (pulse magnetic field variation recording) in the magneto-optical disk of this embodiment according to a general magnetic field modulation system using a general magneto-optical recording/reproducing apparatus (not shown) and the information was reproduced using domain wall displacement reproduction.

As the evaluation conditions, it was assumed that the optical laser had a wavelength of 650 nm and numeric aperture NA of the objective lens of 0.6. Furthermore, the recording bit length was 0.080 µm. Furthermore, the relative speed was 2.40 m/sec.

Furthermore, the power of the optical beam used to record the information was 5.0 mW. The optical beam to reproduce the information has the best jitter characteristic when the power was 2.4 mW and the best jitter was σ = 3.4 ns.

The information was recorded in the magneto-optical disk of this embodiment under the above-described conditions and then reproduced. The obtained C/N was C/N = 41.0 dB that reflected the sufficient noise reduction effect. Furthermore, the bit error rate was 1.5 × 10⁻⁵. This result shows that the magneto-optical disk sufficiently reaches the level of practical use with a recording density of 15 Gbit/inch².

As shown above, by providing a characteristic shape and adopting a new technique of annealing the land 164 with an optical laser of a short wavelength, the magneto-optical disk of this embodiment drastically reduces cross talks and cross writes, which have been conventional obstacles in realizing a domain wall displacement type magneto-optical recording medium with a narrow track pitch and also drastically reduces noise. These prove that the magneto-optical disk of this embodiment is an ultra-high density magneto-optical recording medium that can be put to practical use.

Furthermore, since the land/groove substrate 161 of this embodiment has shallow grooves and can be produced through general injection molding, the manufacturing cost remains at a level comparable to that of the prior art.

### (Fourth Embodiment)

A magneto-optical disk that has been subjected to annealing treatment by irradiating a light beam from a side opposite to the substrate side will be shown as a fourth embodiment. The magneto-optical disk of the fourth embodiment is the same as the magneto-optical disk of the third embodiment unless stated to be otherwise.

FIG. 19 is a conceptual diagram showing a state of the magneto-optical disk according to the fourth embodiment during recording/reproduction. As shown in FIG. 19, the magneto-optical disk according to this embodiment has a structure with a stacked thin film 192 formed on a substrate 191.

This embodiment performs annealing treatment by irradiating an optical laser 193 of a short wavelength onto the stacked thin film 192 from the side opposite to the substrate side (that is, from the stacked thin film 192 side).

Since this embodiment performs annealing treatment by irradiating the optical laser 193 from the stacked thin film 192 side, the energy of the optical laser concentrates on the edges of lands, so that the area of the section in which the magnetic layer is modified by annealing treatment is smaller than that in the third embodiment. That is, it is possible to realize a magneto-optical disk with a narrower track pitch than the magneto-optical disk of the third embodiment. However, the magneto-optical disk of the fourth embodiment must be subjected to annealing treatment during formation of the stacked thin film 192, which is a more complicated manufacturing process and requires a little higher manufacturing cost than that of the third embodiment.

When an optical laser is irradiated from the stacked thin film side as is the case with this embodiment, the presence of a heat radiating layer in the stacked thin film 192 causes the optical laser to be reflected by the heat radiating layer, failing to reach the magnetic layer.

Therefore, as the method of forming the magneto-optical disk of this embodiment, the area A (up to the protective layer 187) is formed according to the method explained using FIG. 18, then the medium is taken out into the atmosphere, subjected to annealing treatment and put into a vacuum apparatus again to form the area B (heat radiating layer 188 and protective coat 189).

As an example of the condition of annealing treatment, the optical laser has a wavelength λ of 405 nm, a numerical aperture of the objective lens of NA of 0.9, a relative rotation speed of the medium of 3.0 m/sec and power of the optical laser of 3.2 mW.

Under the above-described conditions, the magneto-optical disk of this embodiment has actually been manufactured and an evaluation similar to that of the third embodiment has been conducted. In the fourth embodiment, jitter σ was σ=3.6 ns. Furthermore, with reflection of a sufficient noise reduction effect of noise, C/N was C/N=41.1 dB. Furthermore, the bit error rate was 1.0 × 10⁻⁵, which was sufficient from a practical standpoint.

As shown above, the magneto-optical disk of this embodiment has a characteristic shape and uses a new technique of applying annealing treatment to lands using an optical laser of a short wavelength, and can thereby drastically reduce influences of cross talk and cross write and drastically reduce noise as well. From this, the magneto-optical disk of this embodiment can be said to be an ultra-high density magneto-optical recording medium that can be put to practical use.

Furthermore, since the land/groove substrate of this embodiment has shallow grooves and can be produced through general injection molding, the manufacturing cost does not increase so much.

In order to confirm the effects of the foregoing embodiments of the present invention, the following comparative examples will be presented.

### (First Comparative Example)

For the purpose of comparison with the magneto-optical disk of the third embodiment of the present invention, a magneto-optical recording medium as a first comparative example was manufactured.

The magneto-optical recording medium of the first comparative example is the same as the magneto-optical recording medium of the third embodiment with the exception that the surface roughness Ra(L) of the flat sections of lands is 0.35 nm, which is equivalent to the surface roughness Ra(G) of grooves. The substrate of the first comparative example was manufactured by post-baking a original disk with a laser-cut resist at 150°C for 20 minutes.

An evaluation similar to that conducted for the third embodiment was conducted on the magneto-optical recording medium of the first comparative example with the result of jitter σ = 4.8 ns. Furthermore, the bit error rate was 8.0 × 10⁻⁴ which did not reach a practical level. Moreover, influences of cross talk and cross write were so large that they would be questionable from a practical standpoint.

It can be seen from the above that the surface roughness of lands is preferably larger than the surface roughness of grooves as is the case with the magneto-optical disk of the third embodiment.

### (Second comparative example)

For the purpose of comparison with the magneto-optical disk of the fourth embodiment of the present invention, a magneto-optical recording medium as a second comparative example was manufactured.

The magneto-optical recording medium of the second comparative example is the same as the magneto-optical recording medium of the fourth embodiment with the exception that the surface roughness Ra(T) of the groove slope is 1.3 nm. The substrate of the second comparative example was manufactured without applying any post-treatment to the original disk.

An evaluation similar to that conducted for the fourth embodiment was conducted on the magneto-optical recording medium of the second comparative example with the result of jitter σ = 5.2 ns. Furthermore, the bit error rate was 9.8 × 10⁻⁴ which did not reach a practical level. Moreover, influences of cross talk and cross write were not so conspicuous as the first comparative example.

It can be seen from the above that too large a surface roughness of groove slopes deteriorates the domain wall displacement reproduction characteristics and is questionable from a practical standpoint.

### Industrial Applicability

According to the present invention, since the wobble pit arrangement, groove structure and annealing treatment conditions of a magneto-optical recording medium are optimized, a magneto-optical recording medium can be realized which can perform a stable tracking servo with a narrow track pitch, can suppress influences of leakage of a signal from adjacent tracks, and allows stable domain wall displacement reproduction without damaging an information recorded in adjacent tracks when recording an information.

## Claims

1. A magneto-optical recording medium comprising:
a plurality of recording/reproducing tracks; and
wobble pits for a sample servo,
wherein each of the wobble pits is provided between two adjacent tracks and used commonly by the adjacent tracks.

2. The magneto-optical recording medium according to claim 1, which is a domain wall displacement type magneto-optical recording medium and further comprises a substrate, and a domain wall displacement layer, a switching layer and a record carrying layer stacked on the substrate.

3. The magneto-optical recording medium according to claim 2, wherein lands and grooves are formed in the substrate, the grooves are utilized as the recording/reproducing tracks and the magnetization state of the domain wall displacement layer on the lands is modified by annealing.

4. The magneto-optical recording medium according to claim 3, wherein the grooves are not formed in the area where the wobble pits are formed and the wobble pit is formed on an extension of the land.

5. The magneto-optical recording medium according to claim 3, wherein the interval between the grooves is less than the diameter of a light beam used for recording or reproduction.

6. The magneto-optical recording medium according to claim 5, wherein the width of the groove is 2/3 to 7/8 times the beam diameter.

7. The magneto-optical recording medium according to claim 3, wherein the ratio of the width of the land to the width of the groove is 2:9.

8. The magneto-optical recording medium according to claim 4, wherein the width of the wobble pit is 4 to 6 times the width of the land.

9. The magneto-optical recording medium according to claim 8, wherein the depth of the wobble pit is greater than the depth of the groove.

10. The magneto-optical recording medium according to claim 3, wherein the surface roughness of the land is equal to or greater than the surface roughness of the groove.

11. The magneto-optical recording medium according to claim 3, wherein the tip end of the land is formed of a curved surface.

12. The magneto-optical recording medium according to claim 4, wherein the reflectance of the groove is 0.95 or more times the reflectance of a region where the grooves are not formed.
